# EUROPEAN PATENT APPLICATION

(11) **EP 1 714 779 A1**
(43) Date of publication of application: **25.10.2006**
(21) Application number: 05425249.9
(22) Date of filing: 20.04.2005
(51) Int. Cl.: B32B 27/32, B32B 27/08

(54) **Film for packaging applications, in particular twisted packaging applications**

(71) Applicant: Cellografica Gerosa S.p.A., 22044 Inverigo (Como) (IT)
(72) Inventor: Terenghi, Luigi, 20055 Renate (Milano) (IT)
(74) Representative: Tansini, Elio Fabrizio

(57) **Abstract**

A film for packaging applications, in particular twisted packaging applications comprises at least two layers of different polymeric materials having at least one main layer made of a cycloolefin copolymer.

## Description

The present invention relates to a film for packaging applications, in particular twisted packaging applications.

Preferably although not exclusively, the present invention is adapted for use in food packages having a twisted structure, such as films for wrapping sweets, chocolates, pralines, Easter eggs, etc. Such films are submitted to a twist process during packaging of the foodstuffs, to ensure closure of same.

It is known that films presently used for twisted applications are obtained through a suitable superposition of films of appropriate thicknesses and different materials such as cellophane, PVC, HDPE, CPP. Thus packages are obtained that appear like a single multi-layered film wrapping the goods and suitably twisted at one or both ends. In addition a further layer of generally transparent film may be also present; said further layer wraps the goods directly and generally is not submitted to twisting because it is of smaller sizes than the outer film.

The materials commonly used for manufacturing these films have some disadvantages of economical, ecological and mechanical nature, such as impossibility of recycling the material for PVC plants, excessive sensitiveness to moisture and high costs for cellophane, absence of stiffness and necessity to operate at high twist cycles (at 2.5) for CPP, poor twist properties for HDPE.

The present invention aims at solving the problems found in the known art, by proposing a film for packaging applications that is free from the described drawbacks.

In particular, it is an aim of the present invention to propose a film that is a good alternative to the films presently on the market.

In addition, the present invention aims at making available a film that is cheap, ecologically compatible and adapted to protect the product against moisture.

A further aim of the present invention is to provide a film that is competitive and innovative, is able to keep the twist feature unchanged or even to improve it and that can be easily worked during the printing process.

The foregoing and further aims that will become more apparent in the following description, are substantially achieved by a film for packaging applications in accordance with the specification and the appended claims.

Further features and advantages will be best understood from the detailed description of a preferred, but not exclusive, embodiment of a film for packaging applications, in accordance with the present invention.

This description will be set out hereinafter with reference to the accompanying figures, given by way of non-limiting example, in which:

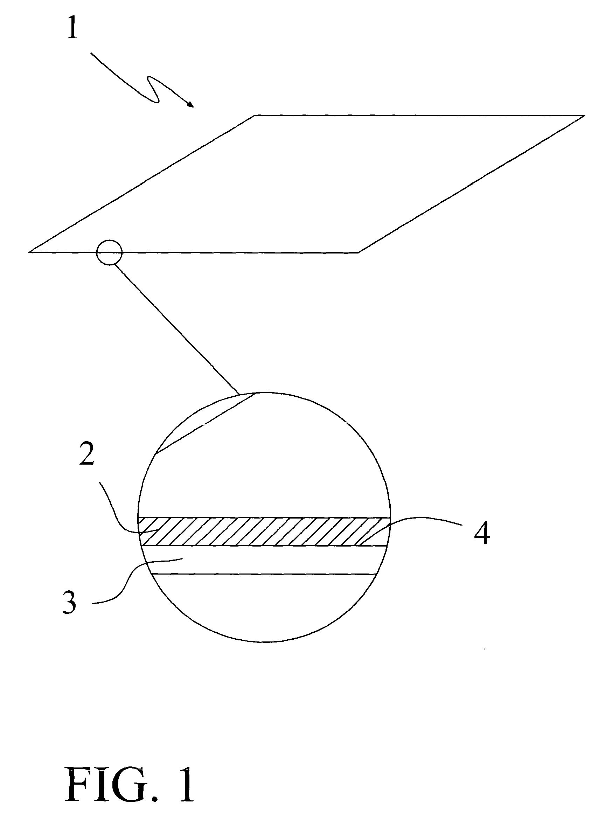

- Fig. 1 shows an embodiment of the film for packaging applications in accordance with the specification and claims;
- Fig. 2 shows a first preferred but not exclusive embodiment of the film for packaging applications in accordance with the specification and claims;
- Fig. 3 shows a second preferred but not exclusive embodiment of the film for packaging applications in accordance with the specification and claims;

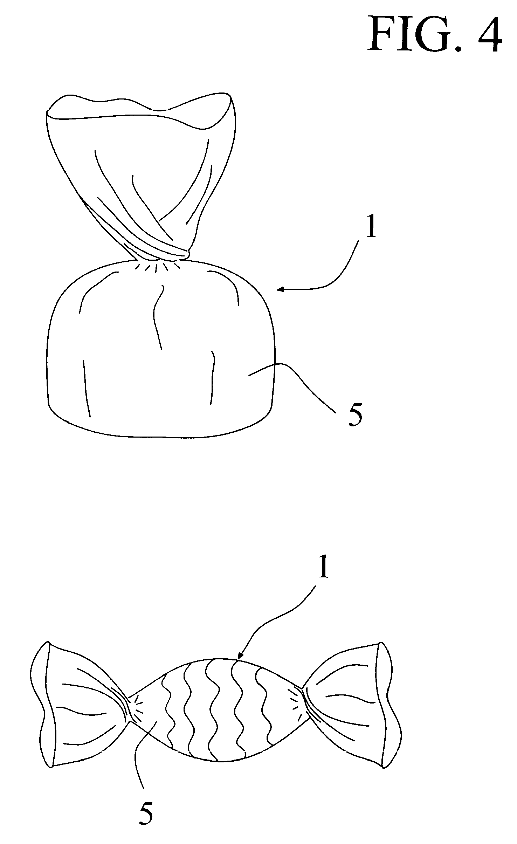

- Fig. 4 shows illustrative applications of the film seen in Figs. 1 and 2.

With reference to the drawings, a film for packaging applications that is similar to known wrapping films currently used for packaging foodstuffs such as sweets, chocolates, pralines, Eastern eggs and the like, has been generally identified by reference numeral 1.

This film 1 is made through superposition of thin flexible sheets of polymeric materials having different chemical and mechanical properties from known materials presently used for producing such films. Generally at least two different layers of polymeric material are superposed. This structure involves the presence of at least one main layer 2 made of a cycloolefin that is used as an ethylene co-monomer (COC). Generally associated with this main layer 2 is at least one supporting layer 3 formed of polyethylene or polypropylene; preferably use of polyethylene is provided.

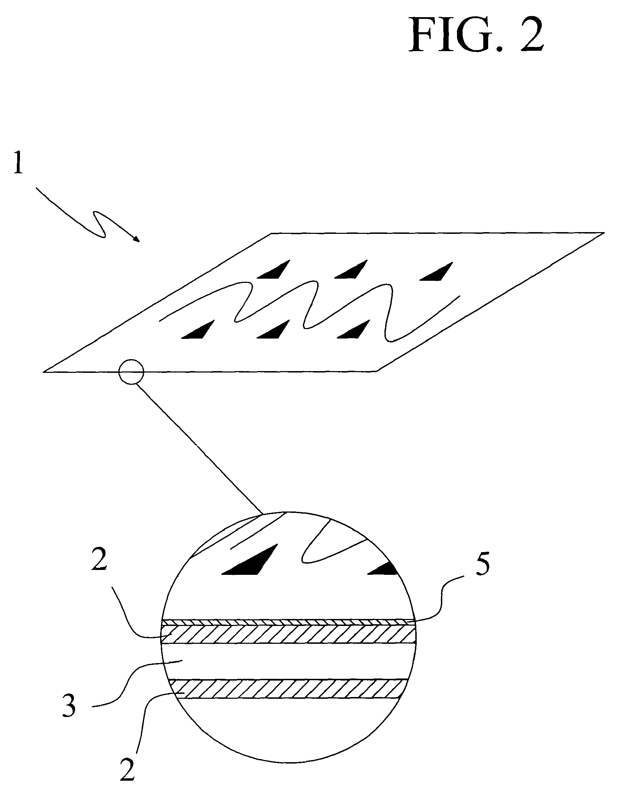

A first preferred embodiment shown in Fig. 2 contemplates superposition of three layers, in which the main layer 2 and supporting layer 3 are disposed in alternated relationship. Preferably the supporting layer 3 is interposed between two main layers 2.

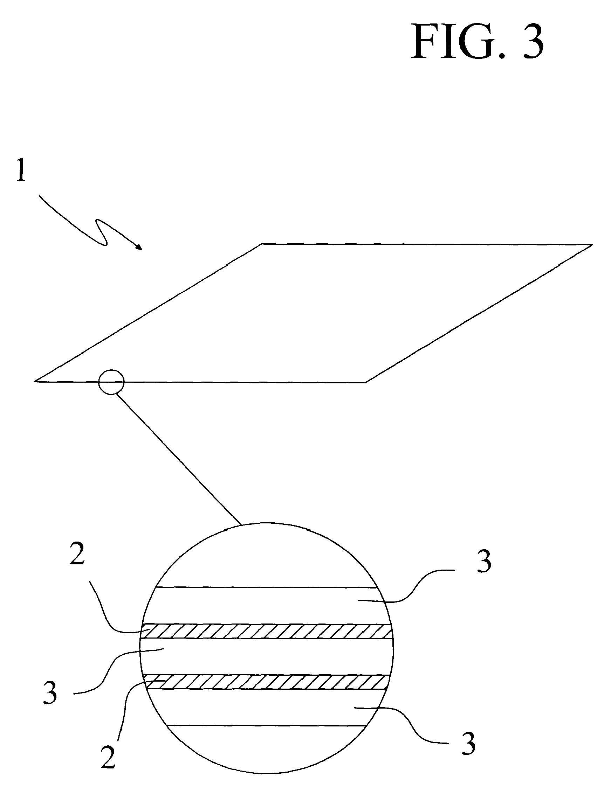

A second preferred embodiment shown in Fig. 3 contemplates superposition of five layers of different materials, three supporting layers 3 and two main layers 2, in which the two different types of materials are alternated and the supporting layers 3 are positioned externally. At all events, depending on current requirements, any layered arrangement of the film is possible (for instance, the outermost layers can be made of COC).

It is to be pointed out that, from a technical point of view, a film with any number of superposed layers at will can be made, but this would be economically disadvantageous while offering equivalent mechanical features.

Cycloolefin copolymers are technological high-performance polymers in which features of high transparency, purity, mechanical strength, resistance to heat and to the attack of many chemicals are joined together. This material is commonly utilised to produce pharmaceutical blister packs, flexible packages for foodstuffs and medical products, syringes, optical and diagnostic components, liquid crystal displays.

The cycloolefin copolymer or COC ensures excellent features of dead fold or twist retention to the film, i.e. it enables the sheet to keep the twisted shape it has received for closing the packaged product. Due to the amorphous nature and molecular structure of this compound, the final behaviour of the film is similar to that of a glass material.

The supporting layer 3 is preferably made of low density polyethylene (LDPE), a thermoplastic resin obtained from polymerisation of ethylene, catalysed with metallocene and to which some substances are added.

Use of polyethylene as compared with use of PVC involves a more reduced impact on human and environmental toxicity; in addition, this plastic material is adapted for working operations involving different production processes such as film extrusion, injection moulding, blowing, etc.

Thickness of the main layer 2 made of COC can vary between 2 and 6 microns, while thickness of the supporting layer 3 can be included in a range of 16 to 30 microns.

On the whole the film can have a thickness in the range of between 20 and 35 microns, depending on how many layers have been provided and on the thickness of each layer.

As already said, the preferred embodiment involves superposition of three layers consisting of an intermediate supporting layer 3 made of LDPE, preferably of a thickness of 19 microns, and two main layers 2 of COC associated with the opposite faces of the supporting layer 3 and preferably of a thickness of 4 microns.

The two main layers 2 can possibly have different thickness. The main layer 2 and supporting layer 3 can be in direct contact with each other; alternatively, interposition of layers of secondary material 4 consisting of adhesive material or nylon for example, can be possibly contemplated.

The film can have additional end layers 5 either for protection purposes, i.e. acting as a barrier against oxygen and/or light for example, or for decorative or advertising purposes. These additional layers 5 can therefore be metallic layers or layers printed with localised deposition of inks, varnishes, colours or paper. In addition the film representing the final product can thus acquire a "cracking" feature.

Alternatively, the outer layer of the film that is visible also after packaging of the goods, can be directly printed or decorated without adding further additional layers.

The COC granules used for producing the film being the object of the invention can indiscriminately be either of the "German" type or of the "American" type, both granule types being known and used in the industry.

Working of the supporting layer contemplates use of "bubble" or "flat-head" extruders, depending on the type of formulation adopted and the performance characteristics of the final packaging machines.

A film made following the described modes and materials offer better performance than the films commonly used for the same purpose and represents an advantageous alternative to the known art films both from an economical and ecological point of view.

In addition, such a film 1 is not sensitive to moisture and can be worked more easily in the printing process.

This film 1 for packaging applications therefore overcomes the limits encountered in known films presently used for packages of foodstuffs having a twisted structure.

## Claims

1. A film for packaging applications, in particular twisted packaging applications, comprising at least two layers of different polymeric materials, **characterised in that** said at least two layers comprise at least one main layer (2) made of a cycloolefin copolymer.

2. A film as claimed in claim 1, **characterised in that** said at least two layers comprise at least one supporting layer (3) made of polyethylene, preferably low-density polyethylene.

3. A film as claimed in claim 1, **characterised in that** said at least two layers comprise at least one supporting layer (3) made of polypropylene.

4. A film as claimed in claim 2 or 3, **characterised in that** it has three superposed layers of different polymeric materials.

5. A film as claimed in claim 4, **characterised in that** said three layers comprise one intermediate supporting layer (3) and two main layers (2) associated with the opposite faces of said intermediate supporting layer (3).

6. A film as claimed in claim 2 or 3, **characterised in that** it has five superposed layers of different polymeric materials.

7. A film as claimed in claim 6, **characterised in that** said five layers comprise three supporting layers (3) and two main layers (2), said five layers being alternately associated with each other.

8. A film as claimed in claims 5 and 7, **characterised in that** said main layers (2) have the same thickness.

9. A film as claimed in claims 5 and 7, **characterised in that** said main layers (2) have different thickness.

10. A film as claimed in claim 7, **characterised in that** said supporting layers (3) have the same thickness.

11. A film as claimed in claim 7, **characterised in that** said supporting layers (3) have different thickness.

12. A film as claimed in one or more of the preceding claims, **characterised in that** said film (1) has an overall thickness in the range of between 20 and 35 microns.

13. A film as claimed in one or more of the preceding claims, **characterised in that** each main layer (2) has a thickness included between 2 and 6 microns.

14. A film as claimed in one or more of the preceding claims, **characterised in that** said supporting layer (3) has a thickness included between 16 and 30 microns.

15. A film as claimed in one or more of the preceding claims, **characterised in that** said supporting layer (3) is in direct contact with said main layer (2).

16. A film as claimed in one or more of the preceding claims, **characterised in that** a layer of secondary material (4) is interposed between said supporting layer (3) and main layer (2), said layer of secondary material (4) being preferably adhesive material and/or nylon.

17. A film as claimed in one or more of the preceding claims, **characterised in that** it comprises additional layers (5) associated with the supporting layer (3) and/or the main layer (2).

18. A package, preferably for food use, having a twisted structure and made of a film according to one or more of claims 1 to 17.

19. Use of a cycloolefin copolymer to make a film (1) with at least one supporting layer (3).

20. A method of making a film with a twistable structure comprising the following steps:
- setting at least one main layer (2) of polymeric material;
- associating at least one supporting layer (3) with said at least one main layer (2),
**characterised in that** said setting step comprises a sub-step of making a film of cycloolefin copolymer.
